# EUROPEAN PATENT SPECIFICATION

(11) **EP 0 962 652 B1**
(45) Date of publication and mention of the grant of the patent: **21.02.2007**
(21) Application number: 99109880.7
(22) Date of filing: 19.05.1999
(51) Int. Cl.: F02P 5/152, F02D 41/02

(54) **Ignition timing control apparatus of on-vehicle internal combustion engine**
Zündzeitpunktsteuerapparate des Verbrennungsmotors eines Kraftfahrzeuges
Appareil de commande d'avance à l'allumage pour moteur à combustion interne d'automobile

(30) Priority: 04.06.1998 JP 15628398
(43) Date of publication of application: 08.12.1999
(73) Proprietor: HONDA GIKEN KOGYO KABUSHIKI KAISHA, Minato-ku, Tokyo (JP)
(72) Inventor: Hirakata, Yoshiaki, Chuo 1-chome, Wako-shi Saitama (JP); Abe, Masahiko, Chuo 1-chome, Wako-shi Saitama (JP); Iwata, Yasuo, Chuo 1-chome, Wako-shi Saitama (JP)
(74) Representative: Prechtel, Jörg

(56) References cited:
- US-A- 4 630 583
- US-A- 5 000 148
- PATENT ABSTRACTS OF JAPAN vol. 011, no. 168 (M-594), 29 May 1987 (1987-05-29) & JP 62 003173 A (TOYOTA MOTOR CORP), 9 January 1987 (1987-01-09)
- PATENT ABSTRACTS OF JAPAN vol. 007, no. 244 (M-252), 28 October 1983 (1983-10-28) & JP 58 131359 A (NISSAN JIDOSHA KK), 5 August 1983 (1983-08-05)

## Description

The present invention relates to an ignition timing control apparatus for controlling the ignition timing of a spark plug of an internal combustion engine mounted on a motor vehicle.

The ignition timing control apparatus of an internal combustion engine mounted on a motor vehicle functions to set a proper ignition timing at which an electric spark is generated by a spark plug in accordance with the operating condition of the engine. For instance, the ignition timing is advanced when the engine is being accelerated to increase the engine speed.

However even when the engine is accelerating, especially during transient operation, e.g., sudden acceleration, in which engine parameters of engine speeds will vary in a short time, no substantial response to the ignition timing control is obtained, sometimes resulting in knocking.

In Japanese Unexamined Patent Publication No. Hei 1-232169, an ignition timing control apparatus, in the case of sudden acceleration, controls to retard the ignition timing when the amount of variation of the throttle valve opening of the internal combustion engine exceeds a specific value, thereby mitigating occurrence of the knocking likely to be caused by a change in engine output during sudden acceleration.

In the prior art ignition timing control apparatus, however, the ignition timing, if retarded in accordance with the amount of change in the opening of the throttle valve, will be retarded after the occurrence of knocking resulting from actual throttle valve operation. This is also in the device which retards the ignition timing when the knocking is detected by the knocking sensor provided in the engine. The related art device, therefore, could not prevent occurrence of the knocking itself.

Furthermore, it is known (patent abstracts of Japan vol. 011, no. 168 (M-594), 29 May 1987 & JP 62 003173 A(TOYOTA MOTOR CORP), 9 January 1987) to control the ignition timing of a car, such that the ignition timing is retarded if a detected degree of acceleration of the car is within a prescribed range and further if a detected gear ratio is within a prescribed range. Also this prior art device does not prevent occurrence of knocking since the high acceleration status of the car results from a respective actual throttle valve operation with a danger of knocking at least for a short time until the ignition timing control apparatus preforms the correction of the ignition timing.

Furthermore, an ignition timing control apparatus is known (US-A-5 000 148) in which the ignition characteristics are varied depending on the gear position. For this aim for each gear position a separate curve representing the ignition position in dependence from the engine speed is specified (figure 6). In particular when using gear boxes with many gears, such a ignition timing control is rather complex.

It is therefore, an object of the present invention to provide a simplified ignition timing control apparatus of an internal combustion engine mounted on a motor vehicle which is capable of preventing the occurrence of the knocking.

This object is solved by the ignition timing control apparatus according to claim 1.

In the ignition timing control apparatus of the present invention, when it has been detected that the engine speed is within the specific range of engine speed and that the transmission gear ratio is high, the engine is regarded to be operating within a knocking range within which the knocking is likely to occur, so that the ignition timing of the internal combustion engine will be retarded. When the engine is thus running within such a knocking range, the ignition timing is instantly retarded to insure generation of electric sparks from a spark plug at a proper ignition timing.

A preferred embodiment of the ignition timing control apparatus of the present invention will be described in detail with reference to the accompanying drawings.
Fig. 1 is a block diagram showing an embodiment of an injection timing control device according to the present invention;
Fig. 2 is a flowchart showing an ignition timing control routine;
Fig. 3 is a curve showing a relationship between the engine speed Ne and the amount of ignition retardation #IGNk; and
Fig. 4 is a flowchart showing the ignition start control routine.

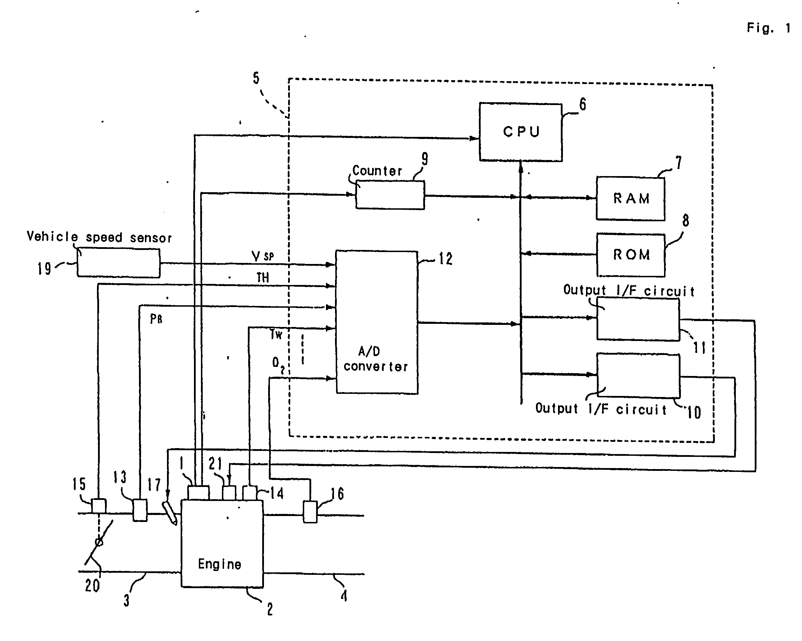

Fig. 1 shows an on-vehicle engine control system equipped with an ignition timing control apparatus according to the present invention. In the engine control system the crank angle sensor 1 comprises a rotor and an electromagnetic pickup (both not shown). On the outer periphery of the rotor, projections made of a magnetic material are continuously formed at a specific interval of angle (e.g., 30 degrees). The electromagnetic pickup is arranged near the outer periphery of the rotor. A crank pulse is generated from the electromagnetic pickup at every turn of the rotor through the specific angle in interlock with the rotation of the engine crankshaft (not shown). The crank angle sensor 1 generates a TDC signal indicating the piston in each cylinder is at TDC and a reference position signal at every 720-degree turn of the crankshaft.

At the output terminal of the crank angle sensor the ECU (Electronic Control Unit) 5 is connected. The ECU 5 is provided with the CPU 6, RAM 7, ROM 8, counter 9, output interface circuits 10 and 11, and A/D converter 12. The counter 9 reset by a crank pulse outputted from the crank angle sensor 1 counts the clock pulse outputted from an unillustrated clock pulse generator, then generating a signal indicating an engine speed Ne. The CPU 6 carries out an interrupt process in response to a reference position signal and a TDC signal. The CPU 6, RAM 7, ROM 8, counter 9, output interface circuits 10 and 11, and A/D converter 12 are all connected to a common bus.

The A/D converter 12 is employed to convert, into digital signals, such analog signals from a plurality of sensors which detects engine operation parameters including intake pipe internal pressure P_{B} required in controlling the engine, coolant temperature Tw, throttle valve opening TH, oxygen concentration O₂ in exhaust emissions, and vehicle speed V_{SP}. The intake pipe internal pressure P_{B} is detected by the intake pipe internal pressure sensor 13 inserted in the intake pipe 3 located downstream side of a throttle valve 20. The coolant temperature Tw is detected by means of a coolant temperature sensor 14. The throttle valve opening TH is detected by means of a throttle opening sensor 15. Furthermore, the oxygen concentration O₂ in the exhaust emissions is detected by means of an oxygen concentration sensor 16 mounted in the exhaust pipe 4. The oxygen concentration sensor 16 is a binary output type oxygen concentration sensor which generates different levels of air-fuel ratio on the rich and lean sides in relation to a stoichometric air fuel ratio as a threshold value. The vehicle speed Vₛₚ is detected by a vehicle speed sensor 19. The CPU 6 executes the fuel injection control routine previously written in the ROM 8, thereby determining the fuel injection time Tout by using these engine operation parameters and the engine speed Ne.

The CPU 6 executes the ignition timing control routine to thereby set the ignition timing, and generates an ignition instruction through the ignition start control routine in accordance with the ignition timing. The ignition timing control routine and the ignition start control routine have been previously written in the ROM 8.

The output interface circuit 10 drives an injector 17 in accordance with an injector drive instruction from the CPU 6. The injector 17 is located in the vicinity of an intake port of the intake pipe 3 of the internal combustion engine, to thereby inject the fuel when driven.

The output interface circuit 11 stops supplying the current to an unillustrated ignition coil of the ignition system 21 in accordance with an ignition instruction fed from the CPU 6, thereby generating an electric spark at an unillustrated spark plug. In this case, the current supply to the ignition coil is started at a predetermined crank angle.

The CPU 6 carries out the ignition timing control routine every specific time (e.g., 10 msec) as follows.

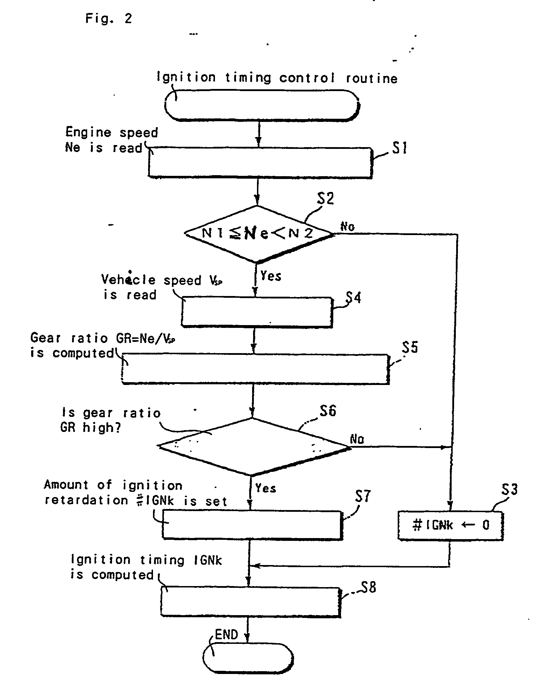

In the ignition timing control routine, the CPU 6 first reads the engine speed Ne from output of the counter 9 as shown in Fig. 2 (Step S1), then determines whether or not the engine speed Ne is within the range from the first specific speed N1 (e.g., 1500 rpm) to the second specific speed N2 (e.g., 2500 rpm)

(Step S2). When Ne<N1 , or Ne≧N2 , the amount of retardation of ignition timing #IGNk for ordinary ignition timing control will be set to zero (Step S3).

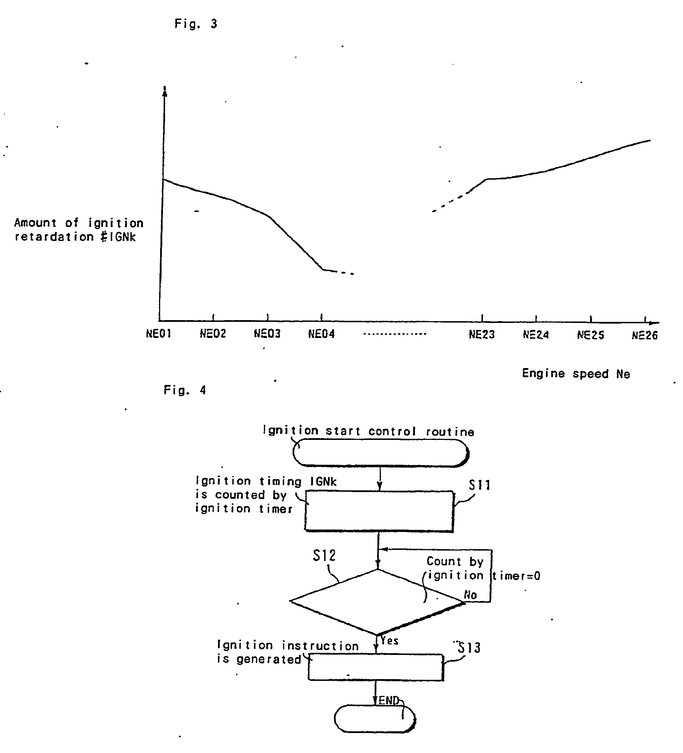

In the meantime, if N1≤Ne<N2, the vehicle speed V_{SP} is read from the output of the A/D converter 12 (Step S4), and the transmission gear ratio GR is calculated from the engine speed Ne and the vehicle speed V_{SP} (Step S5). That is, the gear ratio GR is given by calculating Ne/ V_{SP}. After the calculation, it is determined whether or not the gear ratio GR is high (Step S6) The determination of whether the gear ratio GR is high is done by detecting the gear ratio GR is at or lower the specific value (e.g., 83). In the case the gear ratio is not high, proceed to Step S3 to set the amount of retardation of ignition timing #IGNk to zero. In the case of a high gear ratio, the engine is regarded to be running within the range of knock occurrence; therefore, the amount of retardation #IGNk is set to perform a retard ignition timing control (Step S7). The amount of retardation #IGNk can be retrieved from the amount of retardation data map in the ROM 8 in accordance with the engine speed Ne. For example, as the amount of retardation #IGNk corresponding to the engine speed Ne (NE01 to NE26)has been entered as a retardation amount data map in the ROM 8 as shown in the characteristic curve of Fig. 3, the amount of retardation #IGNk corresponding to the engine speed Ne at that time is read from the retardation amount data map.

After execution of Step S3 or S7, the CPU 6 sets the ignition timing IGNk (Step S8). The ignition timing IGNk is given by calculating IGNk=IGNk0+#IGNk IGNk0 is the basic ignition timing retrieved as a data map from the ROM 8 in accordance with the engine speed Ne and the intake pipe internal pressure P_{B}; for instance, the ignition timing IGNk0 has been set so as to decrease with an increase in the engine speed Ne and a change in the intake pipe internal pressure P_{B} to the atmospheric pressure side

The CPU 6 executes an ignition start control routine at a specific crank angle on the basis of an output signal from the crank angle sensor. In the ignition start control routine, as shown in Fig. 4, the ignition timing IGNk is set to the ignition timer to start to start down counting (Step S11). Then it is determined whether or not the ignition timer has counted to zero (Step S12). When the ignition timer count = 0, an ignition instruction is generated to the output interface circuit 11 (Step S13). Thus the electric current to the ignition coil of the ignition system 21 will be stopped in accordance with the ignition instruction from the CPU 6, causing the spark plug to generate an electric spark.

Therefore, when it has been detected that the engine speed Ne is within the range of N1≦Ne<N2, and the transmission gear ratio is high, the engine is running within a knocking range. In this case, retard ignition is accomplished to retard spark arcing at the spark plug by the amount of ignition retardation #INGk set at Step S7.

In the above-described embodiment, a single-cylinder internal combustion engine has been described, but the present invention is not limited thereto and is applicable to a multicylinder internal combustion engine.

It should be noticed that the ignition timer stated above is formed on a program and may be formed of a hardware.

Furthermore, when the amount of throttle valve opening, or the amount of change in the opening, is under the specific value, it is possible not to retard the ignition timing.

According to the ignition timing control apparatus of the present invention, as heretofore described, when it has been detected that the engine speed is within the specific speed range and the transmission gear ratio is high, the engine is regarded to be operating within an operating range in which the knocking is likely to occur; therefore the ignition timing of the internal combustion engine is retarded. In the knocking range, the ignition timing is instantly retarded to generate a spark arc at the spark plug at a proper ignition timing, thereby preventing occurrence of the knocking.

In summary it is an object of the invention to provide an ignition timing control apparatus of an internal combustion engine (2) mounted on a motor vehicle which can prevent occurrence of the knocking.

When the engine (2) is running within a specific speed range and the transmission gear ratio (GR) is high, the control device determines that the engine (2) is running within an easy-to-knock range in which the knocking is likely to occur. Accordingly an ignition timing retard control of the internal combustion engine (2) is accomplished.

### Explanation of Reference Numerals:

- 1: crank angle sensor
- 2: engine
- 3: intake pipe
- 4: exhaust pipe
- 5: ECU
- 15: throttle opening sensor
- 16: oxygen concentration sensor
- 17: injector
- 20: throttle valve
- 21: ignition system

## Claims

1. An ignition timing control apparatus of an on-vehicle internal combustion engine (2), comprising:
a basic ignition timing generating means for generating a basic ignition timing (ICNKO) in accordance with an engine speed (Ne) and an intake pipe internal pressure (P_{B});
an engine speed detecting means for detecting to see that an internal combustion engine (2) mounted on a motor vehicle is running within a specific range of engine speed, the specific range extending from a first specific speed (N1) to a second specific speed (N2);
a means for detecting the gear ratio (GR) of a transmission mounted on said motor vehicle; and
an ignition timing retard control means for only retarding the ignition timing of said internal combustion engine (2) with respect to the basic ignition timing (ICNkO) when it has been detected that said engine speed (Ne) is within the specific range of engine speed and that the gear ratio (GR) of said transmission is higher than a specific value.

## Patentansprüche

1. Zündzeitpunkt-Steuer-/Regelvorrichtung einer Brennkraftmaschine (2) an einem Fahrzeug, umfassend:
ein Basiszündzeitpunkt-Erzeugungsmittel zum Erzeugen eines Basiszündzeitpunkts (ICNkO) nach Maßgabe einer Motordrehzahl (NE) und eines Ansaugrohr-Innendrucks (P_{B});
ein Motordrehzahl-Erfassungsmittel für eine Erfassung zur Feststellung, dass eine an einem Motorfahrzeug angebrachte Brennkraftmaschine (2) in einem bestimmten Drehzahlbereich läuft, wobei sich der bestimmte Bereich von einer ersten bestimmten Drehzahl (N1) bis zu einer zweiten bestimmten Drehzahl (N2) erstreckt;
ein Mittel zum Erfassen eines Übersetzungsverhältnisses (GR) eines an dem Motorfahrzeug angebrachten Getriebes; und
ein Zündzeitpunkt-Verzögerungs-Steuer-/Regelmittel, um den Zündzeitpunkt der Brennkraftmaschine (2) in Bezug auf den Basiszündzeitpunkt (ICNkO) nur dann zu verzögern, wenn erfasst worden ist, dass die Motordrehzahl (NE) innerhalb des bestimmten Drehzahlbereichs liegt und dass das Übersetzungsverhältnis (GR) des Getriebes größer ist als ein bestimmter Wert.

## Revendications

1. Appareil de commande du calage de l'allumage d'un moteur à combustion interne d'automobile (2), comprenant :
des moyens de génération du calage de l'allumage de base pour générer un calage de l'allumage de base (ICNkO) conformément à une vitesse de moteur (Ne) et à une pression interne de tuyau d'admission (P_{B}) ;
des moyens de détection de la vitesse du moteur pour la détection afin de voir qu'un moteur à combustion interne (2) monté sur un véhicule à moteur tourne dans une plage spécifique de vitesse du moteur, la plage spécifique s'étendant d'une première vitesse spécifique (N1) à une deuxième vitesse spécifique (N2) ;
des moyens pour détecter le rapport d'engrenage (GR) d'une transmission montée sur ledit véhicule à moteur ; et
des moyens de commande du retard de calage de l'allumage pour retarder uniquement le calage de l'allumage dudit moteur à combustion interne (2) par rapport au calage de l'allumage de base (ICNkO) lorsqu'il a été détecté que ladite vitesse du moteur (NE) se situe dans la plage spécifique de la vitesse du moteur et que le rapport d'engrenage (GR) de ladite transmission est supérieur à une valeur spécifique.
